# EUROPÄISCHE PATENTANMELDUNG

(11) **EP 4 033 135 A1**
(43) Veröffentlichungstag der Anmeldung: **27.07.2022**
(21) Anmeldenummer: 21020163.8
(22) Anmeldetag: 25.03.2021
(51) Int. Cl.: F16L 3/04, F16B 15/00, F16B 15/04

(54) **ROHRSCHELLE**

(30) Priorität: 21.01.2021 AT 521 U
(71) Anmelder: Pipelife Austria GmbH & Co. KG, 1100 Wien (AT)
(72) Erfinder: Tomischek, Michael, A-2392 Sulz im Wienerwald (AT); Broucek, Karl, A-1110 Wien (AT)
(74) Vertreter: Keschmann, Marc

(57) **Zusammenfassung**

Bei einer in eine Wand einschlagbaren Rohrschelle (1) zum Befestigen von Rohren, Schläuchen und dgl. mit einem U-förmigen Schellenkörper, dessen zwei Schenkel (2) jeweils drei in Spitzen (12) ausmündende Stifte (5,6) aufweisen, die einen in einer Mittelebene (4) angeordneten mittleren Stift (5) und zwei äußere, bezüglich der Mittelebene (4) symmetrisch angeordnete Stifte (6) umfassen, und dessen die Schenkel (2) miteinander verbindender Bogen (3) wenigstens eine Verstärkungsrippe (8) aufweist, die sich vom Scheitel des Bogens (3) in Richtungen der beiden Schenkel (2) erstreckt, liegen die Spitzen aller Stifte (5,6) in einer gemeinsamen Ebene (7) und es sind zwei Verstärkungsrippen (8) vorgesehen, die bezüglich der Mittelebene (4) symmetrisch verlaufen und zu den äußeren Stiften (6) hin gerichtet sind.

## Beschreibung

Die Erfindung betrifft eine in eine Wand einschlagbare Rohrschelle zum Befestigen von Rohren, Schläuchen und dgl. mit einem U-förmigen Schellenkörper, dessen zwei Schenkel jeweils drei in Spitzen ausmündende Stifte aufweisen, die einen in einer Mittelebene angeordneten mittleren Stift und zwei äußere, bezüglich der Mittelebene symmetrisch angeordnete Stifte umfassen, und dessen die Schenkel miteinander verbindender Bogen wenigstens eine Verstärkungsrippe aufweist, die sich vom Scheitel des Bogens in Richtungen der beiden Schenkel erstreckt.

Eine derartige Rohrschelle ist in der EP 1808628 B1 offenbart.

Rohrschellen dieser Art dienen der Befestigung von Rohren, Schläuchen, Kabeln und dgl. an Wänden aus einem relativ weichen Material, in welches die in Spitzen ausmündenden Stifte durch ein geeignetes Werkzeug eingetrieben werden können. Das Eintreiben der Stifte in die Wand kann beispielswiese durch mit einem Hammer aufgebrachte Schläge oder durch ein pistolenartiges Ausbringungsgerät erfolgen. Die Stifte sind dabei so ausgebildet, dass sich die äußeren Stifte beim Eintreiben in das Material der Wand nach außen biegen, um durch die auf diese Art und Weise erreichte Verspreizung die Haltekraft zu erhöhen. Besonders geeignet sind solche Rohrschellen für Wände aus Gipskarton oder Holz.

Der bogenförmige Bereich der Rohrschelle hat eine Krümmung, die im Wesentlichen dem Durchmesser des zu befestigenden Rohrs entspricht, sodass dieses eng zwischen der Schelle und der Wand festgehalten wird.

Bei der in der EP 1808628 B1 beschriebenen Ausführung weist jeder Schenkel der Rohrschelle drei Stifte auf, wobei der mittlere Stift gegenüber den äußeren Stiften vorsteht. Beim Auflegen der Rohrschelle auf eine ebene Wandfläche liegen somit nicht alle Stifte gleichzeitig auf, sondern die Rohrschelle befindet sich in einem Kippzustand, in dem sie um diejenige Stelle kippen kann, an der die mittleren Stifte aufliegen. Dies führt dazu, dass beim Eintreiben oder Einschlagen der Rohrschelle zuerst die mittleren Stifte in die Wand eindringen. Auf Grund der Schieflage der Rohrschelle besteht jedoch die Gefahr, dass beim Einschlagen der Schelle asymmetrische Kräfte eingebracht werden, was sich ungünstig auswirkt.

Die vorliegende Erfindung zielt daher darauf ab, eine Rohrschelle der eingangs genannten Art dahingehend weiterzubilden, dass eine asymmetrische Krafteinleitung und eine Schrägstellung während des Eintreibens verhindert werden und dass gleichzeitig ein gleichmäßiges Eindringen ohne unerwünschte Verbiegungen der Rohrschelle sichergestellt ist.

Zur Lösung dieser Aufgabe sieht die Erfindung bei einer Rohrschelle der eingangs genannten Art vor, dass die Spitzen aller Stifte in einer gemeinsamen Ebene liegen und dass zwei Verstärkungsrippen vorgesehen sind, die bezüglich der Mittelebene symmetrisch verlaufen und zu den äußeren Stiften hin gerichtet sind. Dadurch, dass keiner der Stifte gegenüber den anderen vorragt, wird ein Aufsetzen der Rohrschelle ohne Kippen erreicht, sodass alle Stifte gleichzeitig in die Wand eingetrieben werden können. Eine Schrägstellung der Schelle kann dadurch wirksam unterbunden werden. Das kippfreie Eintreiben wird zusätzlich durch die zwei Verstärkungsrippen begünstigt, welche die beim Eintreiben auf die Rohrschelle aufgebrachte Kraft gleichmäßig auch nach außen zu den äußeren Stiften verteilen. Dadurch wird sichergestellt, dass die Schelle mit allen sechs Stiften gleichzeitig in das Material der Wand eindringen kann.

Wie an sich bekannt, ist bevorzugt vorgesehen, dass die zwei äußeren Stifte jedes Schenkels nach außen gebogen sind. Dies bewirkt beim Eintreiben der Stifte eine Verspreizung der Schelle, sodass die Schelle wirksam gegen Herausziehen oder Herausfallen gesichert ist.

Um die Verbiegung der äußeren Stifte zur jeweiligen Außenseite hin zu begünstigen, ist bevorzugt vorgesehen, dass die zwei äußeren Stifte jedes Schenkels an ihrem Ansatz an der zum mittleren Stift weisenden Seite eine Materialausnehmung aufweisen. Die Materialausnehmung kann beispielsweise als runde Ausnehmung, insbesondere eine halbkreisförmige Ausnehmung, ausgebildet sein.

Bevorzugt sind die Verstärkungsrippen am Scheitel des Bogens zusammengeführt und weisen eine Abflachung auf. Die Abflachung, bei der die Verstärkungsrippen zusammenkommen, stellt hierbei eine ebene Fläche für das Einwirken eines Schlaggeräts, wie z.B. eines Hammers, bereit.

Um die vom Schlaggerät ausgebrachte Kraft von der Auftreffstelle eines Schlaggeräts wirksam nach außen zu den äußeren Stiften zu verteilen, sieht eine bevorzugte Ausbildung vor, dass die Verstärkungsrippen vom Scheitel des Bogens ausgehend nach außen divergierend verlaufen.

Bevorzugt sind die Verstärkungsrippen zu ihren beiden Enden hin spitz zulaufend ausgebildet.

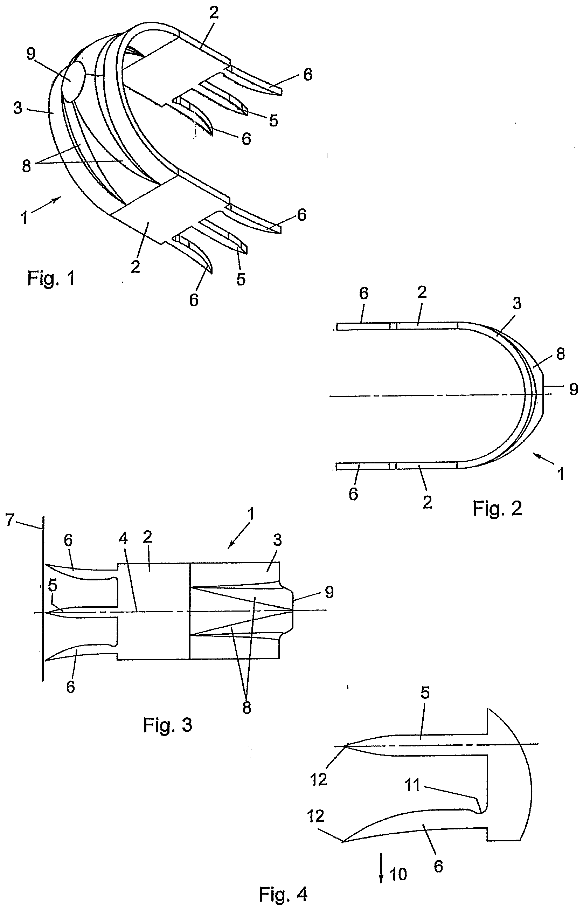

Die Erfindung wird nachfolgend anhand eines in der Zeichnung dargestellten Ausführungsbeispiels näher erläutert. In dieser zeigen Fig. 1 eine perspektivische Ansicht einer erfindungsgemäßen Rohrschelle, Fig. 2 eine Vorderansicht der Rohrschelle von Fig. 1, Fig. 3 eine Seitenansicht der Rohrschelle von Fig. 1 und Fig. 4 eine Detailansicht der Fig. 3.

In den Fig. 1 bis 3 ist die Rohrschelle mit 1 bezeichnet, deren U-förmiger Schellenkörper zwei Schenkel 2 umfasst, die mit einem Bogen 3 verbunden sind. Die zwei Schenkel 2 weisen jeweils drei in Spitzen 12 ausmündende Stifte auf, nämlich einen in einer Mittelebene 4 angeordneten mittleren Stift 5 und zwei äußere, bezüglich der Mittelebene 4 symmetrisch angeordnete Stifte 6. In Fig. 3 ist erkennbar gemacht, dass die Spitzen aller Stifte 5,6 in einer gemeinsamen Ebene 7 liegen.

Weiters sind Verstärkungsrippen 8 ersichtlich, die sich vom Scheitel des Bogens 3 in Richtungen der beiden Schenkel 2 erstrecken. Die beiden Verstärkungsrippen 8 sind bezüglich der Mittelebene 4 symmetrisch und zu den äußeren Stiften 6 hin gerichtet. Die Verstärkungsrippen 8 sind am Scheitel des Bogens 4 zusammengeführt und weisen dort eine Abflachung 9 auf. Die Abflachung dient als Auftreffstelle für ein Schlaggerät, wie z.B. einen Hammer.

In der Detaildarstellung gemäß Fig. 4 ist ersichtlich, dass die äußeren Stifte 6 eine nach außen gebogene Kontur aufweisen, sodass diese beim Eintreiben in die Wand in Richtung des Pfeils 10 nach außen gebogen werden. Eine Materialausnehmung bzw. -schwächung 11, die am Ansatz des äußeren Stifts 6 ausgebildet ist, begünstigt eine solche Verbiegung. Die Spitzen der Stifte sind mit 12 bezeichnet.

## Patentansprüche

1. In eine Wand einschlagbare Rohrschelle (1) zum Befestigen von Rohren, Schläuchen und dgl. mit einem U-förmigen Schellenkörper, dessen zwei Schenkel (2) jeweils drei in Spitzen (12) ausmündende Stifte (5,6) aufweisen, die einen in einer Mittelebene (4) angeordneten mittleren Stift (5) und zwei äußere, bezüglich der Mittelebene (4) symmetrisch angeordnete Stifte (6) umfassen, und dessen die Schenkel (2) miteinander verbindender Bogen (3) wenigstens eine Verstärkungsrippe (8) aufweist, die sich vom Scheitel des Bogens (3) in Richtungen der beiden Schenkel (2) erstreckt, **dadurch gekennzeichnet, dass** die Spitzen aller Stifte (6) in einer gemeinsamen Ebene (7) liegen und dass zwei Verstärkungsrippen (8) vorgesehen sind, die bezüglich der Mittelebene (4) symmetrisch verlaufen und zu den äußeren Stiften (6) hin gerichtet sind.

2. Rohrschelle nach Anspruch 1, **dadurch gekennzeichnet, dass** die Stifte (5,6) gleich lang ausgebildet sind.

3. Rohrschelle nach Anspruch 1 oder 2, **dadurch gekennzeichnet, dass** die zwei äußeren Stifte (6) jedes Schenkels (2) nach außen gebogen sind.

4. Rohrschelle nach Anspruch 1, 2 oder 3, **dadurch gekennzeichnet, dass** die zwei äußeren Stifte (6) jedes Schenkels (2) an ihrem Ansatz an der zum mittleren Stift (5) weisenden Seite eine Materialausnehmung (11) aufweisen.

5. Rohrschelle nach einem der Ansprüche 1 bis 4, **dadurch gekennzeichnet, dass** die Verstärkungsrippen (8) am Scheitel des Bogens (3) zusammengeführt sind und eine Abflachung (9) aufweisen.

6. Rohrschelle nach einem der Ansprüche 1 bis 5, **dadurch gekennzeichnet, dass** die Verstärkungsrippen (8) vom Scheitel des Bogens (3) ausgehend nach außen divergierend verlaufen.

7. Rohrschelle nach einem der Ansprüche 1 bis 6, **dadurch gekennzeichnet, dass** die Verstärkungsrippen (8) zu ihren beiden Enden hin spitz zulaufend ausgebildet sind.

## Geänderte Patentansprüche

### Geänderte Patentansprüche gemäss Regel 137(2) EPÜ.

1. In eine Wand einschlagbare Rohrschelle (1) zum Befestigen von Rohren, Schläuchen und dgl. mit einem U-förmigen Schellenkörper, dessen zwei Schenkel (2) jeweils drei in Spitzen (12) ausmündende Stifte (5,6) aufweisen, die einen in einer Mittelebene (4) angeordneten mittleren Stift (5) und zwei äußere, bezüglich der Mittelebene (4) symmetrisch angeordnete Stifte (6) umfassen, und dessen die Schenkel (2) miteinander verbindender Bogen (3) wenigstens eine Verstärkungsrippe (8) aufweist, die sich vom Scheitel des Bogens (3) in Richtungen der beiden Schenkel (2) erstreckt, wobei die Spitzen aller Stifte (6) in einer gemeinsamen Ebene (7) liegen und dass zwei Verstärkungsrippen (8) vorgesehen sind, die bezüglich der Mittelebene (4) symmetrisch verlaufen und zu den äußeren Stiften (6) hin gerichtet sind, **dadurch gekennzeichnet, dass** die zwei äußeren Stifte (6) jedes Schenkels (2) nach außen gebogen sind.

2. Rohrschelle nach Anspruch 1, **dadurch gekennzeichnet, dass** die Stifte (5,6) gleich lang ausgebildet sind.

3. Rohrschelle nach Anspruch 1 oder 2, **dadurch gekennzeichnet, dass** die zwei äußeren Stifte (6) jedes Schenkels (2) an ihrem Ansatz an der zum mittleren Stift (5) weisenden Seite eine Materialausnehmung (11) aufweisen.

4. Rohrschelle nach Anspruch 1, 2 oder 3, **dadurch gekennzeichnet, dass** die Verstärkungsrippen (8) am Scheitel des Bogens (3) zusammengeführt sind und eine Abflachung (9) aufweisen.

5. Rohrschelle nach einem der Ansprüche 1 bis 4, **dadurch gekennzeichnet, dass** die Verstärkungsrippen (8) vom Scheitel des Bogens (3) ausgehend nach außen divergierend verlaufen.

6. Rohrschelle nach einem der Ansprüche 1 bis 5, **dadurch gekennzeichnet, dass** die Verstärkungsrippen (8) zu ihren beiden Enden hin spitz zulaufend ausgebildet sind.
